# EUROPEAN PATENT SPECIFICATION

(11) **EP 1 381 580 B1**
(45) Date of publication and mention of the grant of the patent: **20.07.2005**
(21) Application number: 02714262.9
(22) Date of filing: 17.04.2002
(51) Int. Cl.: C05B 1/00, C05B 3/00, C05B 5/00, C05B 19/00, C05B 19/02, C05B 21/00, C05G 1/00

(54) **PHOSPHOROUS FOREST FERTILIZER**
PHOSPHOR-WALDDÜNGER
FERTILISANT FORESTIER PHOSPHOREUX

(30) Priority: 17.04.2001 FI 20010782
(43) Date of publication of application: 21.01.2004
(73) Proprietor: Kemira GrowHow Oy, 00181 Helsinki (FI)
(72) Inventor: LASSILA, Seppo, FIN-01600 Vantaa (FI); POUKARI, Juhani, FIN-02430 Masala (FI); YLINEN, Paula, FIN-00840 Helsinki (FI)
(74) Representative: Svensson, Johan Henrik
(86) International application number: PCT/FI2002/000322
(87) International publication number: WO 2002/083598

(56) References cited:
- WO-A1-94/26660
- GB-A- 1 087 872
- GB-A- 1 159 445
- US-A- 2 769 704
- US-A- 3 573 893
- US-A- 3 676 100
- US-A- 3 928 016
- US-A- 5 693 119

## Description

The invention relates to an unleachable phosphorus fertilizer intended for fertilizing barren forest soils, the fertilizer containing iron in addition to long-acting phosphorus, and to a process for the production of the said fertilizer, as well as to its use.

Finland has approx. 20 million hectares of forest, of which 7 million hectares are barren peatland forests. The pH of peatland forest soil is approx. 4, and it remains stable throughout the year. The acid conditions of peatland forests also promote the leaching of water insoluble but acid soluble fertilizer phosphorus, such as apatite phosphorus. Leaching is a problem specific to acid soil areas that naturally lack phosphorus-binding mineral components such as Fe and Al compounds. The leaching out of nutrients causes not only futile economic loss but also detrimental eutrophication of watercourses, since excessive amounts of nutrients accelerate the growth of plants and algae in the watercourses. Consequently, the amount of organic matter, the decomposition of which consumes oxygen, increases in the watercourses. The lack of oxygen in turn further accelerates the leaching of nutrients from the bottom sediments, thereby accelerating eutrophication.

Phosphorus is a very important nutrient for plant metabolism. It has special significance in the energy economy of plants. Effects of phosphorus shortage are visible above all in the quantity and quality of the crops. Research and experimentation relating to peatland forest fertilization was begun in Finland as early as the 1950s. As a result of experiments it has been noted that in addition to nitrogen the most important nutrients required in the fertilization of peatland forests are phosphorus and potassium.

One commonly known phosphorus source material for slow-solubility fertilizers that has long been used industrially consists of apatite minerals, for example fluoroapatite Ca₁₀(PO₄)₆F₂ or hydroxyapatite Ca₁₀(PO₄)₆(OH)₂, the phosphorus of which is water insoluble and is as such only partly available for uptake by plants.

The amount of soluble phosphorus also depends on the pH of the soil and on other compounds present in the soil. If an acid soil has phosphorus-binding mineral components such as Fe and Al compounds, soluble phosphorus is retained specifically on the surfaces of the oxyhydroxides of iron or aluminum present in the soil. This takes place through ligand exchange reactions wherein, for example, OH or H₂O ligands can be exchanged with H₂PO₄. The pH of the soil and the root activity of plants in turn have an effect on how the plants can use these phosphorus reserves bound to soil.

The most problematic situation exists in barren acid peatland forest soils having low concentrations of iron and aluminum. Phosphorus fertilization of these areas presupposes a water insoluble long-acting source of phosphorus, since, as is known, forest fertilization is carried out at intervals of more than 10 years. Apatite minerals are in general long-acting slow-solubility sources of phosphorus, but acidity in the soils of barren peatlands (pH < 4) causes phosphorus sources based on an apatite mineral to dissolve in the soil solution considerably more readily than in an average more neutral field soil. The improved solubility due to the acidity of the soil, combined with the scarcity of phosphorus-binding Fe and Al components, causes in barren peatland forest soils a portion of the phosphorus of even a water insoluble apatite mineral to be leached out. Owing to the risk of the leaching of nutrients, barren peat bogs are at present in general not fertilized.

An attempt to solve the problem of the leaching of phosphorus in acid soil has been made in patent publication WO 9212945 by preparing a special fertilizer by mixing lime and superphosphate at a ratio of 1:1, whereby a product poorly soluble in water but soluble in citrate has been obtained. The objective has been to prevent the leaching of phosphate and simultaneously to regulate soil acidity. By the arrangement according to the publication, calcium is added to the soil to bind water-soluble phosphorus. However, as the final result there are formed in the soil calcium phosphates the stability of which in acid peatlands is as poor as that of an apatite mineral, which chemically is also calcium phosphate. Treatment with lime has little effect on pH control of peatland forest.

In patent publication US 5693119, a fertilizer containing a combination of phosphorus and aluminum is used as a fertilizer for greenhouse plants grown in a nutrient-poor artificial substrate. The problems have included, for example, the preventing of the leaching of phosphorus. Indeed, all nutrients need to be added separately to an artificial substrate by fertilization. The use of aluminum as a binding compound is, however, not regarded as a very advantageous option, since aluminum compounds are toxic in high concentrations and may damage microorganisms present in the soil. Even small amounts may burden the soil and render it unsuitable for agricultural purposes.

The phosphorus-binding effects of iron and aluminum have been studied a great deal. Solid aluminum and iron phosphates have long been regarded as kinds of final products of the phosphorus chain when movements of soluble inorganic phosphorus have been observed in neutral or acid soils. The use of the compounds for fertilization purposes has, however, been studied relatively little. It has been observed that in basic, calcareous soils Fe phosphates and Al phosphates release phosphorus better for uptake by plants than do, for example, calcium phosphates. The pH of the soil is of great significance in this, since the solubility of iron and aluminum phosphates increases as the pH increases.

The properties of slow-solubility phosphorus fertilizers and their use for the fertilization of barren peatlands have been examined in Nieminen's article in *Suo 48* (4), 1997, 115-126. Special emphasis has been laid on factors which affect the leaching of phosphorus. The article additionally mentions various options of preparing phosphorus-containing fertilizers from various minerals, such as strengite, which contains iron in addition to phosphorus. In practice, however, the use of strengite mineral as a fertilizer raw material is nil owing to the rarity of deposits of that mineral and the poor profitability of its potential dressing.

The problems described above can be avoided by using an unleachable, phosphorus fertilizer for fertilizing acid, iron-poor forest soils, which have a pH of below 5, so that the interval between fertilizations is more than 10 years. Fertilizer prepared according to the present invention, which fertilizer at the same time contains a source of iron and is especially suitable for barren, acid peatland forests. According to the invention there is thus obtained a long-acting phosphorus fertilizer that contains a phosphorus source and an iron source, at least 10 % by weight of the phosphorus present in the phosphorus fertilizer being insoluble in water but soluble in neutral ammonium citrate, and the phosphorus fertilizer being in the form of granules or pellets. Further, according to the invention the leaching of phosphorus from the fertilizer is insignificant once the fertilizer is utilized for fertilizing acid, iron-poor forest soils having pH of below 5.

According to the invention there is also provided a method for preparing a phosphorus fertilizer for fertilizing acid, iron-poor forest soils, which have a pH of below 5, so that the interval between fertilizations is more than 10 years, such as this, wherein
a) the solid, pulverous raw materials are mixed together,
b) the formed powder mixture is possibly compressed into a solid mass, and
c) the mass or powder mixture is formed into granules or pellets having a strength of at least 10 N and suitable for fertilizer.

According to the invention there is additionally provided a method for fertilizing acid, iron-poor forest soils, wherein the long-acting phosphorus fertilizer according to the invention, defined above, is spread on the forest soil to be fertilized, the iron present in the fertilizer preventing the phosphorus from being leached out. The spreading is preferably by centrifugal distribution. The pH of the forest soil to be fertilized is typically below 5, preferably approx. 4 or below 4.

The use of the fertilizer according to the invention simultaneously adds to the soil, in addition to slowly dissolving phosphorus, also a component, i.e. iron, binding the leachable phosphorus. An especially slowly dissolving phosphorus is advantageous in forest fertilizers, in which the objective is as long an effective period as possible.

The unleachable, long-acting phosphorus fertilizer according to the invention contains a source of phosphorus and a source of iron.

The phosphorus and the iron may be derived from one and the same compound. This compound may be, for example, an iron-containing phosphate, the phosphorus present in it being insoluble in water but soluble in a neutral ammonium citrate solution. There exist several methods for the assessment of the proportion of phosphorus available to plants in fertilizers and in fertilizer raw materials. The most common methods are based on leaching solutions such as a neutral ammonium citrate solution, a 2 % citric acid solution or a 2 % formic acid solution. The use of the said solutions is based on the assumption that they best illustrate the solubility of phosphorus in an average soil solution from which plants take up their nutrients.

According to the invention, the phosphorus and the iron may also be derived partly or entirely from separate compounds.

Typically 25 - 100 % of the phosphorus in the unleachable long-acting phosphorus fertilizer according to the invention is derived from an iron-containing phosphorus compound. The balance of the phosphorus may be derived from, for example, acid-soluble phosphorus sources, preferably from calcium phosphates, such as an apatite mineral.

Preferably 30 - 70 % by weight of the phosphorus in the unleachable long-acting phosphorus fertilizer is derived from an iron-containing phosphorus compound. The balance, i.e. 30 - 70 % by weight, may be derived from, for example, acid-soluble phosphorus sources, preferably calcium phosphates, such as an apatite mineral.

The molar ratio of iron to phosphorus in the unleachable and long-acting phosphorus fertilizer according to the invention describes how effectively the leaching of phosphorus can be prevented. Preferably the molar ratio is within the range 0.1 - 1.0, most preferably 0.4 - 0.6.

The iron source according to the invention may be an inorganic iron compound not containing phosphorus, such as sulfate, hydroxide, oxide or nitrate, for example ferric sulfate, or a phosphorus-containing iron compound such as iron phosphate. Preferably the iron phosphate is ferric phosphate. The iron compound may also be a byproduct of another chemical process. Most preferably the iron source used is ferric phosphate present in slurry recovered by precipitation in connection with the treatment of wastewater, the ferric phosphate having been further treated so as to become suitable for use as a fertilizer raw material.

The phosphorus present in the phosphorus and iron/phosphorus sources according to the invention must be sufficiently soluble in neutral ammonium citrate, preferably over 30 %, calculated from the total phosphorus concentration.

Furthermore, the phosphorus and iron/phosphorus sources used must not exceed the maximum concentrations of impurity components permitted for fertilizers. These have been defined, for example, in Finland in regulations (No. 45/1994) giving concentration limits with respect to heavy metals and other detrimental impurities for compounds suitable for fertilizers.

In order to obtain the desired fertilizer composition, it is possible to add to the fertilizer in addition to phosphorus other nutrients, such as potassium, in which case the raw material used may be, for example, chloride, sulfate, nitrate, or nitrogen, in which case the raw material used may be, for example potassium nitrate, ammonium nitrate, urea or slow-acting methylene urea, or both. Furthermore, when necessary, it is possible to add other nutrients, such as boron, copper, magnesium, zinc, calcium and/or sulfur.

The unleachable and long-acting phosphorus fertilizer according to the invention can be prepared by various methods, for example by compacting. In this case, solid, pulverous raw materials which have a particle size less than 500 µm, preferably less than 200 µm, and a moisture content within the range 1 - 4 % by weight and which, with respect to impurities, are of the fertilizer grade, such as apatite, ferric phosphate, potassium chloride, gypsum, magnesium sulfate, sodium borate and copper sulfate, are mixed together to form a powder of uniform quality. The powder is compressed by using pressure, preferably at least 100 kN, at a suitable moisture content, preferably within the range 2 - 4 %, between two rollers into a sheet by using a commercial apparatus, such as a Bepex GmbH compactor. The prepared sheet is crushed in the crusher belonging to the apparatus into granules of suitable size, and the granules are screened. Dust of undersized particle size is, when necessary, recycled into the process.

The particle size of the fertilizer product prepared according to the invention may be 1 - 5 mm, preferably 2 - 4 mm, and its moisture content is 1 - 3 %.

Alternatively the long-acting phosphorus fertilizer according to the invention can also be prepared by other compression methods, for example, by using a pan mill. In this case the fertilizer raw material is pressed by means pan rolls through holes in a matrix, whereby cylindrical pellets are formed.

Alternatively the long-acting fertilizer according to the invention can also be granulated by so-called rolling granulation. In this case the granulation is carried out by means of water, steam or both by using, for example a plate or a granulation drum.

Forest fertilizers must withstand spreading by means of, for example, a centrifugal distributor, which is operated at ground level, or currently to an increasing extent aerially, by helicopter or by airplane. The sufficient strength for the fertilizer granules according to the invention is at minimum 10 - 20 N, depending on the recipe and the granule shape. The long-acting fertilizer granules prepared according to the invention are highly suitable for centrifugal distribution.

The iron-containing phosphorus fertilizer according to the invention is especially suited for use for long-acting fertilization of barren, iron-poor peatland forests, in which case the interval between fertilizations may be over 10 years. From the fertilizer product according to the invention phosphorus is released slowly in the course of several years for uptake by plants. The leaching of phosphorus from the fertilizer is insignificant, during the first year less than 0.1 mg/l, and presumably in the next few years it is of the same order, provided that no changes occur in the properties of the soil.

The product according to the invention and the method for its preparation are described below with examples without, however, restricting the invention to them.

The percentages in the present specification are percentages by weight, unless otherwise stated.

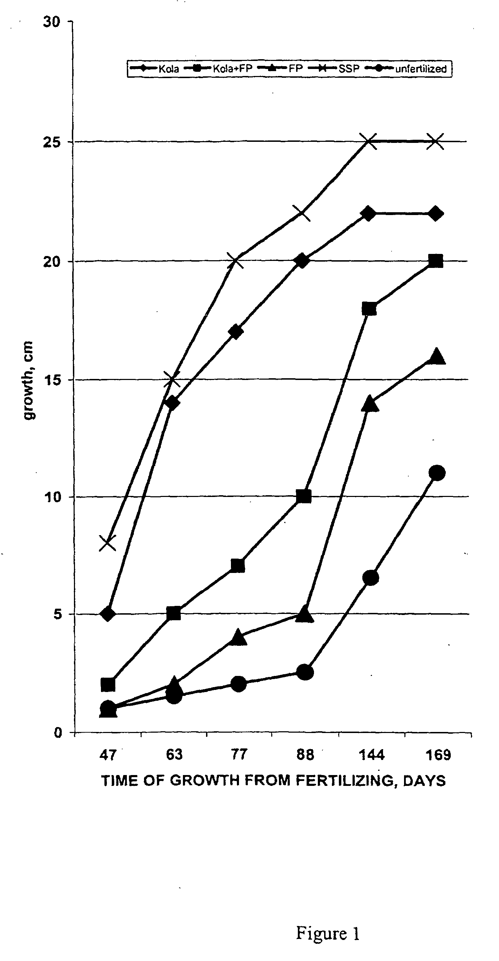

Figure 1 depicts results obtained from the comparison tests.

### Example 1.

Four different fertilizers were prepared, with four different recipes. All of the fertilizers corresponded by their composition to the N-P-K 0-9-16 type used for the fertilization of peatland forests and containing phosphorus 8 - 9 % by weight.

The solubility in water and in ammonium citrate of the phosphorus present in the fertilizers was varied in these four different fertilizers by using different sources of phosphorus.

Of the fertilizers prepared two, A and B, were according to the invention and the other two, C and D, were reference fertilizers.

In order to produce in the fertilizers the desired phosphorus concentration and phosphorus solubility, the phosphorus sources used were in fertilizer A an apatite mineral (Kola) and a recrystallized ferric phosphate (FP) precipitated from the slurry in the waste water treatment process, in such a manner that 50 % of the total phosphorus was derived from Kola and 50 % from the ferric phosphate. In fertilizer B, only the ferric phosphate described above was used. In fertilizer C the source of phosphorus was solely apatite (Kola) and in fertilizer D solely superphosphate (SSP).

The solubilities of the compounds used as sources of phosphorus, i.e. apatite, ferric phosphate and superphosphate, are shown in Table 1, calculated as phosphorus pentoxide.

**Table 1.**

| Solubilities of sources of phosphorus. | | | |
|---|---|---|---|
| Solubilities of sources of phosphorus | Total concentration (%) | Solubility in water (%) | Solubility in ammonium citrate solution PH = 7 (%) |
| Kola | 38.4 | < 0.1 | 0.52 |
| FP | 31.2 | 0.2 | 31.3 |
| SSP | 19 | 16-17 | 18 - 19 |

The chemical compositions of the apatite, ferric phosphate and superphosphate used as sources of phosphorus are shown in Table 2.

**Table 2.**

| Chemical compositions of the sources of phosphorus. | | | |
|---|---|---|---|
| | FP | Kola | SSP |
| P₂O₅ (%) | 31-32 | 38-39 | 19 |
| Fe (%) | 26 | < 0.5 | < 0.5 |
| Al (%) | < 1 | < 0.5 | < 0.5 |
| Pb (ppm) | 50 | < 1 | < 1 |
| Cd (ppm) | < 1 | < 1 | < 1 |
| Hg (ppm) | < 0.1 | < 0.1 | < 0.1 |

The potassium source used in all of the fertilizer recipes was KCl having a K concentration of 50 %. The gypsum was dihydrate gypsum of Kemira Agro, Siilinjärvi.

Table 3 shows the recipes used for preparing the fertilizers. The concentration of phosphorus in the apatite was 17 %, in the ferric phosphate 13.5 %, and in the superphosphate 8.2 %.

**Table 3.**

| Fertilizer | C | A | B | D |
|---|---|---|---|---|
| Phosphorus source | Kola | Kola+FP | FP | SSP |
| Kola (kg) | 580 | 265 | 0 | 0 |
| FePO₄ (kg) | 0 | 333 | 600 | 0 |
| SSP (kg) | 0 | 0 | 0 | 736 |
| KCl (kg) | 320 | 320 | 302 | 221 |
| Gypsum (kg) | 42 | 15 | 30 | 0 |
| MgSO₄ (kg) | 20 | 20 | 20 | 14 |
| Sodium borate (kg) | 23 | 23 | 23 | 16 |
| CuSO₄ . 5H₂O (kg) | 5 | 5 | 5 | 3.5 |

The fertilizers were prepared by compacting using a Bepex GmbH compactor. Solid, pulverous raw materials were first mixed together and were compressed at a moisture content of 2 - 4 % between two rolls into sheets under a pressure of 100 - 150 kN. The sheets were further crushed into granules of 2 - 4 mm.

The fertilizer products thus obtained were analyzed, and their properties are shown in Table 4.

**Table 4.**

| Fertilizer | C | A | B | D |
|---|---|---|---|---|
| Phosphorus source | Kola | Kola + FP | FP | SSP |
| Phosphorus soluble in acid (%) | 9.3 | 8.5 | 8.0 | 7.0 |
| Phosphorus soluble in ammonium citrate (%) | 0.65 | 4.2 | 7.9 | 6.5 |
| Water-soluble phosphorus (%) | < 0.02 | < 0.02 | 0.05 | 5.6 |
| K | 17.7 | 16.9 | 15.4 | 11.3 |
| Mg | 0.46 | 0.63 | 0.77 | 0.31 |
| B | 0.38 | 0.36 | 0.35 | 0.25 |
| Cu | 0.12 | 0.12 | 0.12 | 0.08 |
| Fe | 0.17 | 7.2 | 14.7 | 0.23 |
| Ca | 19.9 | 9.5 | 0.82 | 15.8 |
| S | 1.5 | 1.8 | 2.6 | 9.9 |

### Example 2.

The properties of fertilizers A, B, C and D prepared in accordance with Example 1 were compared in the following cultivation tests and leaching tests.

Silver birch seeds were germinated in a cultivation chamber to the stage of two or three seed leafs. The seeds had been planted in containers filled with mineral-poor bog peat the composition of which corresponds to the composition of peatland forest soil. The containers were fertilized with fertilizers according to Example 1 so that the fertilizer amounts in all treatments were 45 kg P and 80 kg K per hectare. Seven test containers were reserved for each fertilizer, and the averages were calculated from the results of these. The seedlings were watered during the tests with nitrogen-containing water in order to maintain a nutrient balance.

The growth of the silver birch seedlings and the phosphorus content of the irrigation water that had flowed through the containers were followed up as a function of time. Figure 1 shows the growth results according to seedling length (cm) for the duration of a follow-up period of 169 days. The leaching of phosphorus, mg P/l, was followed up for 140 days (Table 5).

For reference test E there were additionally used containers not fertilized at all.

At the beginning of the cultivation the growth (Figure 1) of seedlings fertilized with fertilizers containing ferric phosphate was clearly slower than that of seedlings fertilized with apatite and superphosphate fertilizers. However, after 140 days the plants fertilized with ferric phosphate fertilizers continued their growth as a consequence of the activation of root activity, while the growth of the other seedlings was beginning to be saturated. High concentration of ferric phosphate in the fertilizer slows down growth, but already with a 50:50 apatite:ferric phosphate mixture there is attained after 169 days the growth level obtained with apatite and superphosphate fertilizers. Totally without fertilization, growth is permanently clearly weaker.

Table 5 shows the results of phosphorus concentrations in the leachates, mg P/l.

**Table 5.**

| Fertilizer used | 47 days (mg/l) | 63 days (mg/l) | 77 days (mg/l) | 140 days (mg/l) |
|---|---|---|---|---|
| A | 0.11 | 0.09 | 0.05 | 0.05 |
| B | 0.09 | 0.09 | 0.05 | 0.04 |
| C | 1 | 0.9 | 0.8 | 0.6 |
| D | 20 | 20 | 20 | 2 |
| E | 0.11 | 0.09 | 0.08 | 0.09 |

Respectively, the phosphorus concentrations in the leachates (Table 5) remained low, less than 0.1 mg/l, throughout the growth test when fertilizers A and B according to the invention were used. With reference products C and D the phosphorus concentrations in the leachates varied within the range 1 - 50 mg/l, i.e. they were up to ten-fold or one-hundred-fold.

The background value for the phosphorus concentration of leachates, measured from the soil without fertilizers, was less than 0.1 mg/l. A comparison with the leachates from unfertilized containers shows that leaching from fertilizers containing ferric phosphate was truly low.

These growth results show that, in consequence of root activity of the trees, trees are also able to take up the phosphorus of citrate-soluble ferric phosphate as their nutrient. Iron present in the ferric phosphate well inhibits the leaching into watercourses of phosphorus dissolving in soil but not yet taken up by plants. Thus the fertilizers in question are well suited for purposes requiring a fertilizer which contains long-acting phosphorus but the phosphorus of which is not substantially leached into watercourses.

From the results obtained it can additionally be concluded that, because leaching is low when the fertilizer according to the invention is used, the plants will even in several subsequent growing seasons have available to them phosphorus resources, which in cases C and D are substantially reduced or already completely leached out from the soil.

## Claims

1. A phosphorus fertilizer for fertilizing acid, iron-poor forest soils, which have a pH of below 5, so that the interval between fertilizations is more than 10 years, **characterized in that** it contains a phosphorus source and an iron source, at least 10 % by weight of the phosphorus present in the phosphorus fertilizer being insoluble in water but soluble in neutral ammonium citrate, and the phosphorus fertilizer being in the form of granules or pellets, and **in that** the leaching of phosphorus from the fertilizer is insignificant when the fertilizer is used for fertilizing acid, iron-poor forest soils having a pH of below 5.

2. The phosphorus fertilizer according to Claim 1, **characterized in that** the phosphorus source and the iron source are derived from the same compound, preferably ferric phosphate.

3. The phosphorus fertilizer according to Claim 2, **characterized in that** the said ferric phosphate is a byproduct derived from an industrial process and suitable for fertilizer.

4. The phosphorus fertilizer according to Claim 3, **characterized in that** the said ferric phosphate is derived from slurry formed in connection with waste water treatment.

5. The phosphorus fertilizer according to Claim 1, **characterized in that** the phosphorus source and the iron source are partly or entirely derived from different compounds.

6. The phosphorus fertilizer according to Claim 5, **characterized in that** the iron source is an inorganic compound not containing phosphorus, preferably ferric sulfate.

7. The phosphorus fertilizer according to any of the preceding claims, **characterized in that** 25 - 100 % by weight of the phosphorus in the phosphorus fertilizer is phosphorus soluble in a neutral ammonium citrate and present in an iron-containing phosphorus compound, and any balance is derived from acid-soluble calcium phosphate.

8. The phosphorus fertilizer according to Claim 7, **characterized in that** the acid-soluble calcium phosphate is apatite.

9. The phosphorus fertilizer according to any of Claims 1-8, **characterized in that** in addition to the said phosphorus and iron sources it contains other nutrients, preferably potassium, nitrogen, or both, and trace nutrients, preferably boron, copper, magnesium, zinc, sulfur and/or calcium.

10. The phosphorus fertilizer according to Claim 1, **characterized in that** it is in the form of granules having a particle size within the range 1 - 5 mm, preferably 2 - 4 mm, and having a moisture content within the range 1 - 3 %.

11. The use of the phosphorus fertilizer according to any of the preceding claims as an unleachable phosphorus fertilizer for the fertilization of acid, iron-poor forest soils, which have a pH of below 5, so that the interval between fertilizations is more than 10 years.

12. A method for preparing the phosphorus fertilizer according to any of Claims 1-10, **characterized in that**
a) the solid, pulverous raw materials are mixed together,
b) the formed powder mixture is possibly compressed into a solid mass, and
c) the mass or powder mixture is formed into granules or pellets having a strength of at least 10 N and suitable for fertilizer.

13. A method for fertilizing acid, iron-poor forest soils having a pH of below 5, **characterized in that** the phosphorus fertilizer according to any of Claims 1-10 is spread on the forest soil to be fertilized, the iron present in the fertilizer preventing the phosphorus from being leached out, centrifugal distribution being preferably used.

14. The method according to Claim 13, **characterized in that** the pH of the forest soil to be fertilized is approx. 4 or below 4.

## Patentansprüche

1. Ein Phosphordünger zur Düngung von säurehaltigen, eisenarmen Waldböden, die einen pH unterhalb von 5 aufweisen, so dass der Zeitraum zwischen Düngungen mehr als 10 Jahre beträgt, **dadurch gekennzeichnet, dass** er eine Phosphorquelle und eine Eisenquelle enthält, wobei wenigstens 10 Gew.-% des Phosphors, der in dem Phosphordünger vorhanden ist, in Wasser unlöslich ist, aber in neutralem Ammoniumcitrat löslich ist, und der Phosphordünger in der Form von Körnern oder Pellets vorliegt, und wobei das Auslaugen des Phosphors aus dem Dünger nicht signifikant ist, wenn der Dünger zur Düngung von säurehaltigen, eisenarmen Waldböden mit einem pH unterhalb von 5 verwendet wird.

2. Der Phosphordünger gemäß Anspruch 1, **dadurch gekennzeichnet, dass** die Phosphorquelle und die Eisenquelle aus der gleichen Verbindung, vorzugsweise Eisenphosphat, abgeleitet sind.

3. Der Phosphordünger gemäß Anspruch 2, **dadurch gekennzeichnet, dass** das Eisenphosphat ein Nebenprodukt ist, das aus einem industriellen Verfahren abgeleitet und als Dünger geeignet ist.

4. Der Phosphordünger gemäß Anspruch 3, **dadurch gekennzeichnet, dass** das Eisenphosphat aus einer Schlämmung abgeleitet ist, die in Verbindung mit einer Abwasserbehandlung gebildet wird.

5. Der Phosphordünger gemäß Anspruch 1, **dadurch gekennzeichnet, dass** die Phosphorquelle und die Eisenquelle teilweise oder vollständig aus verschiedenen Verbindungen abgeleitet sind.

6. Der Phosphordünger gemäß Anspruch 5, **dadurch gekennzeichnet, dass** die Eisenquelle eine anorganische Verbindung ist, die keinen Phosphor enthält, vorzugsweise Eisensulfat.

7. Der Phosphordünger gemäß einem der vorangegangenen Ansprüche, **dadurch gekennzeichnet, dass** 25 - 100 Gew.-% des Phosphors in dem Phosphordünger in einem neutralen Ammoniumcitrat löslich ist und in einer Eisen-enthaltenden Phosphorverbindung vorliegt und jeglicher Ausgleich aus säurelöslichem Kalziumphosphat abgeleitet ist.

8. Der Phosphordünger gemäß Anspruch 7, **dadurch gekennzeichnet, dass** das säurelösliche Kalziumphosphat Apatit ist.

9. Der Phosphordünger gemäß einem der Ansprüche 1 bis 8, **dadurch gekennzeichnet, dass** er zusätzlich zu den Phosphor- und Eisenquellen andere Nährstoffe enthält, vorzugsweise Kalium, Stickstoff oder beides und Spurenelemente, vorzugsweise Bor, Kupfer, Magnesium, Zink, Schwefel und/oder Kalzium.

10. Der Phosphordünger gemäß Anspruch 1, **dadurch gekennzeichnet, dass** er in der Form von Körnern mit einer Partikelgröße in dem Bereich von 1 - 5 mm, vorzugsweise 2 - 4 mm vorliegt und einen Feuchtigkeitsgehalt innerhalb des Bereiches von 1 - 3 % aufweist.

11. Die Verwendung des Phosphordüngers gemäß einem der vorangegangenen Ansprüche als ein nicht-auslaugender Phosphordünger zur Düngung von säurehaltigen, eisenarmen Waldböden, die einen pH unterhalb von 5 aufweisen, so dass der Zeitraum zwischen Düngungen mehr als 10 Jahre beträgt.

12. Ein Verfahren zur Herstellung des Phosphordüngers gemäß einem der Ansprüche 1 - 10, **dadurch gekennzeichnet, dass**,
a) die festen, pulverförmigen Rohmaterialien miteinander vermischt werden,
b) die gebildete Pulvermischung möglicherweise in eine feste Masse komprimiert wird, und
c) die Masse oder Pulvermischung in Körner oder Pellets mit einer Stärke von wenigstens 10 N geformt wird und als Dünger geeignet ist.

13. Ein Verfahren zur Düngung von säurehaltigen, eisenarmen Waldböden mit einem pH unterhalb von 5, **dadurch gekennzeichnet, dass** der Phosphordünger gemäß einem der Ansprüche 1 - 10 auf dem zu düngenden Waldboden vorzugsweise unter Verwendung einer zentrifugalen Verteilung ausgebreitet wird, wobei das in dem Dünger vorhandene Eisen, den Phosphor darin hindert, auszulaugen,.

14. Das Verfahren gemäß Anspruch 13, **dadurch gekennzeichnet, dass** der pH des zu düngenden Waldbodens ungefähr 4 oder weniger als 4 beträgt.

## Revendications

1. Un fertilisant à base de phosphore pour la fertilisation de sols forestiers acides et pauvres en fer, lesquels présentent un pH inférieur à 5, de sorte que l'intervalle entre fertilisations soit de plus de 10 années, **caractérisé en ce qu'**il contient une source de phosphore et une source de fer, au moins 10 % en poids du phosphore présent dans le fertilisant à base de phosphore étant insoluble dans l'eau mais soluble dans le citrate d'ammonium neutre, **en ce que** le fertilisant à base de phosphore est sous forme de granules ou pellets, et **en ce que** l'entraînement du phosphore contenu dans le fertilisant est insignifiant quant le fertilisant est utilisé pour la fertilisation de sols forestiers acides et pauvres en fer, lesquels présentent un pH inférieur à 5.

2. Le fertilisant à base de phosphore selon la revendication 1, **caractérisé en ce que** la source de phosphore et la source de fer sont obtenues à partir du même composé, de préférence du phosphate ferrique.

3. Le fertilisant à base de phosphore selon la revendication 2, **caractérisé en ce que** le phosphate ferrique est un sous-produit, dérivant d'un procédé industriel, qui est susceptible d'être utilisé comme fertilisant.

4. Le fertilisant à base de phosphore selon la revendication 3, **caractérisé en ce que** le phosphate ferrique est un sous-produit obtenu à partir d'une boue produite lors du traitement des eaux usées.

5. Le fertilisant à base de phosphore selon la revendication 1, **caractérisé en ce que** la source de phosphore et la source de fer proviennent, en partie ou en totalité, de composés différents.

6. Le fertilisant à base de phosphore selon la revendication 5, **caractérisé en ce que** la source de fer consiste en un composé inorganique, ne contenant pas de phosphore, de préférence du sulfate ferrique.

7. Le fertilisant à base de phosphore selon une quelconque des revendications précédentes, **caractérisé en ce que** de 25 à 100% en poids du phosphore contenu dans le fertilisant à base de phosphore est du phosphore soluble dans un citrate d'ammonium neutre, **en ce qu'**ils sont présents dans un composé du phosphore contenant du fer, et **en ce que** tout complément dérive de phosphate de calcium soluble dans un acide.

8. Le fertilisant à base de phosphore selon la revendication 7, **caractérisé en ce que** le phosphate de calcium soluble est de l'apatite.

9. Le fertilisant à base de phosphore selon une quelconque des revendications 1 à 8, **caractérisé en ce que** en plus desdites sources de phosphore et de fer, ce fertilisant contient d'autres agents nutritifs, de préférence potassium, azote ou les deux et des traces d'agents nutritifs, de préférence bore, cuivre, magnésium, zinc, soufre et/ou calcium.

10. Le fertilisant à base de phosphore selon la revendication 1, **caractérisé en ce qu'**il est sous forme de granules ayant une dimension particulaire comprise entre 1 et 5 mm, de préférence entre 2 et 4 mm, et présente une teneur en humidité comprise entre 1 et 3%.

11. L'utilisation d'un fertilisant à base de phosphore selon une quelconque des revendications précédentes, en tant que fertilisant à base de phosphore non entraînable pour la fertilisation de sols forestiers acides et pauvres en fer, lesquels présentent un pH inférieur à 5, de sorte que l'intervalle entre fertilisations soit de plus de 10 années.

12. Un procédé pour préparer un fertilisant à base de phosphore selon une quelconque des revendications 1 à 10, **caractérisé en ce que**:
a) les matériaux bruts pulvérulents solides sont mélangés entre eux ;
b) le mélange de poudres formé est éventuellement comprimé pour former une masse solide, et
c) la masse du mélange de poudres est mise sous forme de granules ou pellets présentant une résistance d'au moins 10N et susceptibles d'être utilisées en tant que fertilisant.

13. Un procédé pour la fertilisation de sols forestiers acides et pauvres en fer, lesquels présentent un pH inférieur à 5, **caractérisé en ce que** le fertilisant à base de phosphore selon une quelconque des revendications 1 à 10, est étalé sur le sol forestier à fertiliser, le fer présent dans le fertilisant empêchant le phosphore d'être entraîné, la distribution par voie centrifuge étant employée de préférence.

14. Le procédé selon la revendication 13, **caractérisé en ce que** le pH du sol forestier à fertiliser est d'environ 4 ou inférieur à 4.
